# FASCICULE DE BREVET EUROPEEN

(11) **EP 0 999 939 B1**
(45) Date de publication et mention de la délivrance du brevet: **27.02.2002**
(21) Numéro de dépôt: 98941333.1
(22) Date de dépôt: 15.07.1998
(51) Int. Cl.: B60C 9/22, B60C 9/20

(54) **ARMATURE DE SOMMET DE PNEUMATIQUE**
REIFENGÜRTEL
TYRE REINFORCEMENT BELT

(30) Priorité: 01.08.1997 FR 9709996
(43) Date de publication de la demande: 17.05.2000
(73) Titulaire: COMPAGNIE GENERALE DES ETABLISSEMENTS MICHELIN-MICHELIN & CIE, 63040 Clermont-Ferrand Cédex (FR)
(72) Inventeur: COLOM, André, F-63000 Clermont-Ferrand (FR)
(74) Mandataire: Devaux, Edmond-Yves
(86) Numéro de dépôt international: EP9804394
(87) Numéro de publication internationale: WO9906227

(56) Documents cités:
- EP-A- 0 360 539
- EP-A- 0 388 178
- US-A- 4 688 615
- PATENT ABSTRACTS OF JAPAN vol. 018, no. 526 (M-1683), 5 octobre 1994 & JP 06 183207 A (BRIDGESTONE CORP), 5 juillet 1994
- PATENT ABSTRACTS OF JAPAN vol. 018, no. 543 (M-1687), 17 octobre 1994 & JP 06 191219 A (BRIDGESTONE CORP), 12 juillet 1994

## Description

L'invention concerne un pneumatique à armature de carcasse radiale ancrée dans chaque bourrelet à au moins une tringle, et comprenant une armature de sommet constituée par au moins deux nappes dites de travail, superposées et formées de fils ou câbles parallèles entre eux dans chaque nappe et croisés d'une nappe à l'autre en formant avec la direction circonférentielle du pneumatique des angles au plus égaux à 45° en valeur absolue.

La demande française FR-A-2 744 955, en vue d'abaisser la température de fonctionnement d'un pneumatique à armature de carcasse radiale de type "Poids-Lourds", tout en ayant une solution tout aussi efficace qu'économique, préconise d'adjoindre à ladite armature de carcasse une armature de sommet comprenant au moins deux nappes de sommet de travail en câbles inextensibles, croisés d'une nappe à l'autre, en faisant avec la direction circonférentielle des angles compris entre 10° et 45°, caractérisée en ce que, en l'absence de toute nappe formée de câbles inextensibles faisant avec la direction circonférentielle un angle supérieur à 45°, une nappe additionnelle, continue axialement, formée d'éléments métalliques orientés sensiblement parallèlement à la direction circonférentielle, est placée radialement entre les nappes de travail, ladite nappe additionnelle ayant une largeur axiale au moins égale à 50 % de la largeur axiale maximale S₀ de l'armature de carcasse, et au moins égale à 1,05 fois la largeur axiale de la nappe de sommet de travail la plus large.

Dans le cadre ci-dessus, la nappe additionnelle peut être formée de câbles en acier continus dits semi-élastiques, c'est-à-dire des câbles présentant des allongements relatifs à la rupture compris entre 2 % et 4 %. Ces câbles permettent d'obtenir le niveau de rigidité apte à une répartition harmonieuse de la tension circonférentielle entre les nappes de sommet de travail et la nappe additionnelle. Lesdits câbles sont avantageusement dits "bi-module", c'est-à-dire présentant une courbe, contrainte de traction en fonction de l'allongement relatif, ayant des faibles pentes pour les faibles allongements et une pente sensiblement constante et forte pour les allongements supérieurs. Le module avant cuisson très faible, pour des allongements inférieurs à 2 %, permettent une augmentation du développement circonférentiel de la nappe additionnelle pendant la cuisson du pneumatique.

La nappe additionnelle peut aussi être formée de câbles métalliques en acier orientés circonférentiellement et coupés de manière à former des tronçons de longueur très inférieure à la longueur circonférentielle de la nappe, les coupures entre tronçons étant axialement décalées les unes par rapport aux autres . Un tel mode de réalisation permet de conférer, de manière simple, à la nappe additionnelle la rigidité désirée, quelle qu'elle soit.

Le choix des câbles élastiques ou coupés pour le renforcement de la nappe additionnelle ne permet pas la meilleure résistance à la fatigue de ladite nappe, soit en conséquence d'une diminution de la force de rupture des câbles élastiques, soit en conséquence de l'existence de concentrations de contrainte dans le mélange de calandrage des câbles coupés.

Le brevet US-A-4 688 615 montre un pneumatique comprenant les caractéristiques du preambule de la revendication 1.

Afin de permettre une meilleure résistance à la fatigue de la nappe additionnelle d'éléments de renforcement métalliques et circonférentiels, tout en permettant une industrialisation plus facile, l'invention propose l'emploi comme éléments de renforcement d'éléments métalliques ondulés dans le plan de la nappe. Ainsi, le pneumatique à armature de carcasse radiale, conforme à l'invention, ayant une armature de sommet comprenant au moins deux nappes de sommet de travail formées d'éléments de renforcement métalliques inextensibles, croisés d'une nappe à la suivante en faisant avec la direction circonférentielle des angles compris entre 10° et 45°, est caractérisé en ce que, en l'absence de toute nappe formée d'éléments de renforcement inextensibles faisant avec la direction circonférentielle un angle supérieur à 45°, une nappe additionnelle, continue axialement, formée d'éléments de renforcement ondulés, est placée radialement entre les nappes de travail, ladite nappe ayant une largeur axiale au moins égale à 50 % de la largeur axiale maximale de l'armature de carcasse, les ondulations des éléments de renforcement étant parallèles entre elles, en phase et orientées parallèlement à la direction circonférentielle, et le rapport de la rigidité linéique de la nappe additionnelle sur la somme des rigidités linéiques des autres nappes de l'armature de sommet étant au plus égale à 0,10.

La rigidité linéique d'extension d'une nappe d'éléments de renforcement (mesurée sur une nappe d'éléments prélevée sur le pneumatique vulcanisé) résulte de la force de traction, exercée selon la direction moyenne desdits éléments par unité de largeur de nappe, nécessaire pour obtenir un allongement relatif donné ε, et peut s'exprimer par la formule R = 1/p . dF/dε, R étant la rigidité de la nappe considérée, p le pas entre éléments de ladite nappe, dF/dε la dérivée de la force de traction par élément par rapport à l'allongement relatif, et ε étant égal à 0,5 %, ou par la formule R = dF/dε, dF/dε étant alors la dérivée de la force de traction par unité de largeur de la nappe par rapport à l'allongement relatif.

De manière préférentielle, le rapport de l'amplitude a sur la longueur d'onde λ des ondulations est compris entre 4 % et 15 %, l'amplitude a d'une ondulation étant par définition mesurée crête à crête. Le rapport a/λ compris entre 4 % et 15 % permet d'avoir des éléments de renforcement ne contrariant pas la conformation de l'ébauche de pneumatique dans le moule de vulcanisation, tout en permettant l'obtention, après cuisson, montage et gonflage du pneumatique, d'une rigidité linéique d'armature de sommet nécessaire et suffisante à l'amélioration de l'endurance de ladite armature de sommet.

Les éléments de renforcement ondulés dans le plan de la nappe sont préférentiellement métalliques et mieux encore des câbles métalliques en acier, qui assurent à la nappe additionnelle une plus grande endurance à la fatigue.

Quelle que soit la matière dont sont constitués les éléments de renforcement (câbles ou monofilaments), ils sont avantageusement de plus gros diamètre que celui des éléments de renforcement, généralement des câbles métalliques en acier, des nappes de l'armature de sommet situées radialement de part et d'autre de ladite nappe additionnelle.

Des éléments métalliques ondulés dont la direction moyenne est circonférentielle sont des éléments dont les ondulations ont des axes ayant une direction faisant avec la direction circonférentielle un angle compris dans l'intervalle + 5°, - 5° autour de 0.

Il est aussi avantageux que la nappe additionnelle ait une largeur axiale au moins égale à 1,05 fois la largeur axiale de la nappe de sommet de travail la plus large.

Une manière avantageuse d'utiliser la nappe additionnelle d'éléments circonférentiels ondulés, manière convenant plus particulièrement à des pneumatiques de rapport de forme H/S au moins égal à 0,50, consiste à conférer à la première nappe de sommet de travail une courbure méridienne sensiblement égale à la courbure méridienne de l'armature de carcasse sous-jacente, de façon à pouvoir la disposer parallèlement à ladite armature de carcasse sans interposition de profilés. La nappe additionnelle est alors prévue avec une courbure sensiblement nulle en étant séparée de la première nappe de travail par des profilés appropriés, de forme sensiblement triangulaire.

L'armature de sommet, conforme à l'invention, sera avantageusement complétée par une nappe de sommet dite de protection, formée de câbles métalliques élastiques droits en acier, orientés par rapport à la direction circonférentielle avec un angle sensiblement égal à l'angle formé par les câbles de la nappe de sommet de travail radialement la plus à l'extérieur, et dont la largeur axiale est au moins égale à la largeur axiale de la nappe de travail située radialement le plus à l'extérieur.

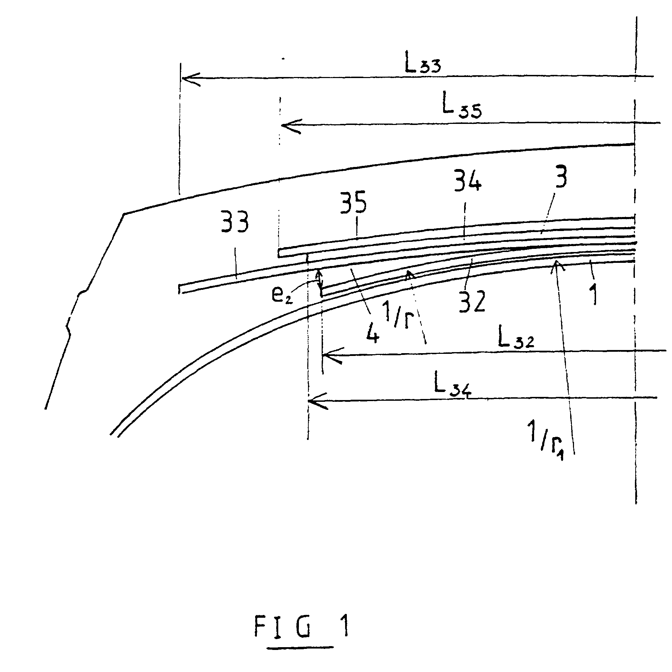

Les caractéristiques et avantages de l'invention seront mieux compris à l'aide de la description qui suit et qui se réfère au dessin, illustrant à titre non limitatif un exemple d'exécution, et sur lequel la figure unique 1 représente schématiquement, vue en section méridienne, une armature de sommet conforme à l'invention.

Le pneumatique P, de dimension 315 / 80 R 22.5 X, a un rapport de forme H/S égal à 0,8, H étant la hauteur du pneumatique P sur sa jante de montage et S sa largeur axiale maximale. Ledit pneumatique P comprend une armature de carcasse radiale (1) ancrée dans chaque bourrelet à au moins une tringle en formant un retournement, et formée d'une seule nappe de câbles métalliques. Cette armature de carcasse (1) est frettée par une armature de sommet (3), formée radialement de l'intérieur à l'extérieur :
- d'une première nappe de sommet travail (32) formée de câbles métalliques 14-28 non frettés, inextensibles et en acier, lesdits câbles ayant un diamètre de 1,25 mm, parallèles entre eux dans la nappe et disposés avec un pas de 2,0 mm (mesuré perpendiculairement auxdits câbles). Ils sont orientés par rapport à la direction circonférentielle avec un angle α, égal dans le cas montré à 18°. Ladite première nappe est radialement adjacente et parallèle à l'armature de carcasse (1), sa courbure méridienne 1/r étant sensiblement égale à la courbure méridienne 1/r₁ de l'armature de carcasse (1) sous-jacente, les câbles respectivement de la nappe de carcasse et de la nappe de travail étant séparés par une épaisseur constante de mélange caoutchouteux ;
- surmontant la première nappe de sommet de travail (32), d'une nappe additionnelle (33) formée de câbles métalliques en acier 27-23 non frettés, inextensibles, de diamètre égal à 1,4 mm et séparés les uns des autres d'un pas égal à 2 mm. Lesdits câbles présentent des ondulations d'amplitude a crête à crête égale à 5 mm et une longueur d'onde λ égale à 100 mm, soit approximativement 1/30 de la longueur circonférentielle de la nappe (33). Lesdits éléments sont orientés à 0°, c'est-à-dire que les axes des ondulations qui les représentent sont circonférentiels. Les bords axialement extérieurs de la première nappe de sommet de travail (32) sont séparés de la nappe additionnelle (33) de câbles circonférentiels ondulés par des profilés (4) de section transversale sensiblement triangulaire, l'épaisseur e₂ de caoutchouc entre la nappe (32) et la nappe (33), mesurée au niveau de l'extrémité axialement extérieure de la nappe (32) étant égale sensiblement à 2 mm ;
- puis d'une deuxième nappe de sommet de travail (34) formée de câbles métalliques identiques à ceux de la première nappe (32), disposés avec le même pas et faisant avec la direction circonférentielle un angle β, opposé à l'angle α et, dans le cas montré, égal audit angle α de 18°, (mais pouvant être différent dudit angle α) ;
- et enfin d'une dernière nappe (35) de câbles métalliques en acier dits élastigues, orientés par rapport à la direction circonférentielle d'un angle γ de même sens que l'angle β et égal audit angle β, (mais pouvant être différent), cette dernière nappe étant une nappe dite de protection, et des câbles dits élastiques étant des câbles ayant à la rupture un allongement relatif au moins égal à 4 %.

La largeur axiale L₃₂ de la première nappe de travail (32) est approximativement égale à 0,50 fois la largeur axiale maximale S₀ de la fibre moyenne de l'armature de carcasse (1), soit 160 mm, ce qui est, pour un pneumatique de forme usuelle très inférieur à la largeur de la bande de roulement, qui est égale, dans le cas étudié, à 235 mm. La largeur axiale L₃₄ de la deuxième nappe de travail (34) est légèrement inférieure à la largeur L₃₂, soit 155 mm. La largeur axiale L₃₃ de la nappe additionnelle (33) est sensiblement égale à 190 mm, ce qui représente approximativement 0,6 S₀. En fait, la largeur L₃₃ de la nappe additionnelle (33) est très supérieure à la largeur L₃₂ (L₃₄) de la nappe de travail la plus large. La dernière nappe de sommet (35), dite de protection, a une largeur L₃₅ très légèrement supérieure à la largeur L₃₄ des nappes de sommet de travail, soit 165 mm.

Le pneumatique ainsi décrit ci-dessus, a été comparé à des pneumatiques tels que décrits dans la demande citée en référence, par un roulage dit en dérive, la charge ainsi qu'une force transversale étant imposées aux pneumatiques gonflés à leur pression recommandée. Comparé à un pneumatique ayant une même architecture d'armature de sommet, mais avec des câbles métalliques en acier discontinus en tant qu'éléments de renforcement de la nappe additionnelle, le gain en endurance est sensiblement de 40 % (mesurée en km parcourus). De la même manière, le gain est de 20 %, comparativement à l'emploi de câbles métalliques acier continus et élastiques dans la nappe additionnelle. Ce gain est de 80 % par rapport à un pneumatique de même architecture d'armature de sommet mais sans nappe additionnelle.

## Revendications

1. Pneumatique à armature de carcasse radiale (1), ayant une armature de sommet (3) comprenant au moins deux nappes de sommet de travail (32,34) formées d'éléments de renforcement métalliques inextensibles, croisés d'une nappe à la suivante en faisant avec la direction circonférentielle des angles compris entre 10° et 45°, en l'absence de toute nappe formée d'éléments de renforcement inextensibles faisant avec la direction circonférentielle un angle supérieur à 45°, une nappe additionnelle (33), continue axialement étant placée radialement entre les nappes de travail (32,34), ladite nappe (33) ayant une largeur axiale L₃₃ au moins égale à 50 % de la largeur axiale maximale S₀ de l'armature de carcasse (1), **caractérisé en ce que** ladite nappe additionnelle (33) est formée d'éléments de renforcement ondulés, les ondulations de câbles étant parallèles entre elles, en phase et orientées parallèlement à la direction circonférentielle, et le rapport de la rigidité linéique de la nappe additionnelle (33) sur la somme des rigidités linéiques des autres nappes (32, 34, 35) de l'armature de sommet étant au plus égale à 0,10.

2. Pneumatique selon la revendication 1, **caractérisé en ce que** les éléments de renforcement ondulés dans le plan de la nappe additionnelle (33) sont des câbles métalliques en acier.

3. Pneumatique selon l'une des revendications 1 ou 2, **caractérisé en ce que** le rapport de l'amplitude a sur la longueur d'onde λ des ondulations, des éléments de renforcement de la nappe additionnelle (33), est compris entre 0,04 et 0,15.

4. Pneumatique selon l'une des revendications 1 à 3, **caractérisé en ce que** les éléments de renforcement de la nappe additionnelle (33) sont avantageusement de plus gros diamètre que celui des éléments de renforcement des nappes de travail (32, 34) situées radialement de part et d'autre de ladite nappe additionnelle (33).

5. Pneumatique selon l'une des revendications 1 à 4, **caractérisé en ce que** la nappe additionnelle (33) a une largeur axiale L₃₃ au moins égale à 1,05 fois la largeur axiale de la nappe de sommet de travail (33, 34) la plus large.

6. Pneumatique selon l'une des revendications 1 à 5, **caractérisé en ce que** la première nappe de sommet de travail (32) a une courbure méridienne 1/r sensiblement égale à la courbure méridienne 1/r₁ de l'armature de carcasse (1) sous-jacente, de façon à ce qu'elle soit disposée parallèlement à ladite armature de carcasse (1), des profilés (3) étant interposés entre les bords de la nappe de travail (32) et la nappe additionnelle (33), dont la courbure est sensiblement nulle.

7. Pneumatique selon l'une des revendications 1 à 6, **caractérisé en ce que** l'armature de sommet (3) comprend en outre une nappe continue axialement (35), dite de protection, radialement située au dessus de la dernière nappe de travail (34), formée de câbles métalliques élastiques rectilignes, et dont la largeur axiale L₃₅ est au moins égale à la largeur axiale L₃₄ de la nappe de travail radialement la plus à l'extérieur.

## Patentansprüche

1. Luftreifen mit radialer Karkassenbewehrung (1), mit einer Scheitelbewehrung (3), die mindestens zwei Arbeitsscheitellagen (32, 34) aufweist, welche aus unausdehnbaren metallischen Verstärkungselementen gebildet werden, die sich von einer Lage zur anderen kreuzen, indem sie mit der Umfangsrichtung Winkel zwischen 10° und 45° bilden, wobei in Abwesenheit jeglicher aus unausdehnbaren Verstärkungselementen, die mit der Umfangsrichtung einen Winkel von mehr als 45° bilden, geformten Lage, eine axial durchgehende, zusätzliche Lage (33) radial zwischen die Arbeitslagen (32, 34) gebracht wird, wobei diese Lage (33) eine axiale Breite L₃₃ mindestens gleich 50% der maximalen axialen Breite So der Karkassenbewehrung (1) hat, **dadurch gekennzeichnet, daß** die zusätzliche Lage (33) aus gewellten Verstärkungselementen geformt ist, wobei die Welligkeiten der Seile untereinander parallel, in Phase und parallel zur Umfangsrichtung ausgerichtet sind, und das Verhältnis der längenbezogenen Steifigkeit der zusätzlichen Lage (33) zur Summe der längenbezogenen Steifigkeiten der anderen Lagen (32, 34, 35) der Scheitelbewehrung höchstens 0,10 beträgt.

2. Luftreifen nach Anspruch 1, **dadurch gekennzeichnet, daß** die in der Ebene der zusätzlichen Lage (33) gewellten Verstärkungselemente Metallseile aus Stahl sind.

3. Luftreifen nach einem der Ansprüche 1 oder 2, **dadurch gekennzeichnet, daß** das Verhältnis der Amplitude a zur Wellenlänge λ der Welligkeiten der Verstärkungselemente der zusätzlichen Lage (33) zwischen 0,04 und 0,15 liegt.

4. Luftreifen nach einem der Ansprüche 1 bis 3, **dadurch gekennzeichnet, daß** die Verstärkungselemente der zusätzlichen Lage (33) vorteilhafterweise einen größeren Durchmesser aufweisen als die Verstärkungselemente der Arbeitslagen (32, 34), die sich radial zu beiden Seiten der zusätzlichen Lage (33) befinden.

5. Luftreifen nach einem der Ansprüche 1 bis 4, **dadurch gekennzeichnet, daß** die zusätzliche Lage (33) eine axiale Breite L₃₃ mindestens 1,05 mal so groß wie die axiale Breite der breitesten Arbeitsscheitellage (32, 34) hat.

6. Luftreifen nach einem der Ansprüche 1 bis 5, **dadurch gekennzeichnet, daß** die erste Arbeitsscheitellage (32) eine Meridiankrümmung 1/r im wesentlichen gleich der Meridiankrümmung 1/r₁ der darunterliegenden Karkassenbewehrung (1) hat, so daß sie parallel zur Karkassenbewehrung (1) liegt, wobei Profilteile (3) zwischen die Ränder der Arbeitslage (32) und der zusätzlichen Lage (33) eingefügt sind, deren Krümmung im wesentlichen Null ist.

7. Luftreifen nach einem der Ansprüche 1 bis 6, **dadurch gekennzeichnet, daß** die Scheitelbewehrung (3) außerdem eine axial durchgehende, sogenannte Schutzlage (35) aufweist, die sich radial über der letzten Arbeitslage (34) befindet, die aus elastischen, geradlinigen Metallseilen besteht, und deren axiale Breite L₃₅ mindestens gleich der axialen Breite L₃₄ der radial am weitesten außen liegenden Arbeitslage ist.

## Claims

1. A tyre with radial carcass reinforcement (1), having a crown reinforcement (3) comprising at least two working crown plies (32, 34) formed of inextensible metallic reinforcement elements, crossed from one ply to the next, forming angles of between 10° and 45° with the circumferential direction, in the absence of any ply formed of inextensible reinforcement elements forming an angle greater than 45° with the circumferential direction, an additional, axially continuous, ply (33) being placed radially between the working plies (32, 34), said ply (33) having an axial width L₃₃ equal to at least 50% of the maximum axial width S₀ of the carcass reinforcement (1), **characterised in that** said additional ply (33) is formed of undulating reinforcement elements, the undulations of the cables being parallel to each other, in phase and oriented parallel to the circumferential direction, and the ratio of the rigidity per unit length of the additional ply (33) to the total of the rigidities per unit length of the other plies (32, 34, 35) of the crown reinforcement being at most 0.10.

2. A tyre according to Claim 1, **characterised in that** the reinforcement elements which undulate in the plane of the additional ply (33) are metallic cables made of steel.

3. A tyre according to one of Claims 1 or 2, **characterised in that** the ratio of the amplitude a to the wavelength λ of the undulations of the reinforcement elements of the additional ply (33) is between 0.04 and 0.15.

4. A tyre according to one of Claims 1 to 3, **characterised in that** the reinforcement elements of the additional ply (33) are advantageously of greater diameter than that of the reinforcement elements of the working plies (32, 34) located radially on either side of said additional ply (33).

5. A tyre according to one of Claims 1 to 4, **characterised in that** the additional ply (33) has an axial width L₃₃ at least equal to 1.05 times the axial width of the widest working crown ply (33, 34).

6. A tyre according to one of Claims 1 to 5, **characterised in that** the first working crown ply (32) has a meridian curvature 1/r substantially equal to the meridian curvature 1/r₁ of the subjacent carcass reinforcement (1), such that it is arranged parallel to said carcass reinforcement (1), profiled members (3) being interposed between the edges of the working ply (32) and the additional ply (33), the curvature of which is substantially zero.

7. A tyre according to one of Claims 1 to 6, **characterised in that** the crown reinforcement (3) furthermore comprises an axially continuous ply (35), referred to as a protective ply, radially located above the final working ply (34), formed of rectilinear elastic metallic cables, and the axial width L₃₅ of which is at least equal to the axial width L₃₄ of the radially outermost working ply.
